# EUROPÄISCHE PATENTSCHRIFT

(11) **EP 1 356 667 B1**
(45) Veröffentlichungstag und Bekanntmachung des Hinweises auf die Patenterteilung: **22.09.2004**
(21) Anmeldenummer: 02712844.6
(22) Anmeldetag: 24.01.2002
(51) Int. Cl.: H04N 5/00

(54) **VORRICHTUNG ZUM EMPFANG VON DIGITALEN RUNDFUNKSIGNALEN**
DEVICE FOR RECEIVING DIGITAL RADIO SIGNALS
DISPOSITIF DE RECEPTION DE SIGNAUX RADIO NUMERIQUES

(30) Priorität: 01.02.2001 DE 10104441
(43) Veröffentlichungstag der Anmeldung: 29.10.2003
(73) Patentinhaber: Grundig Multimedia B.V., 1083HJ Amsterdam (NL)
(72) Erfinder: HORN, Bernhard, 91301 Forchheim (DE)
(74) Vertreter: Pröll, Jürgen
(86) Internationale Anmeldenummer: PCT/EP2002/000684
(87) Internationale Veröffentlichungsnummer: WO 2002/062052

(56) Entgegenhaltungen:
- EP-A- 0 679 035
- EP-A- 1 021 036
- DE-A- 10 007 710
- DE-C- 19 820 936
- US-A- 5 237 610
- US-A- 5 920 572
- US-A- 6 154 633

## Beschreibung

Die Erfindung betrifft eine Vorrichtung zum Empfang von digitalen Rundfunksignalen.

Es sind bereits sogenannte Settop-Boxen bekannt, die zum Empfang von analogen und/oder digitalen Satelliten-Rundfunksignalen vorgesehen sind. Derartige Settop-Boxen werden üblicherweise in Form eines eigenständigen Gerätes realisiert und zwischen die Außeneinheit einer Satelliten-Empfangsanlage und einen herkömmlichen Fernsehempfänger geschaltet. In einer derartigen Settop-Box erfolgt eine Umsetzung der von der Außeneinheit der Satelliten-Empfangsanlage abgeleiteten Signale in Signale, die einem herkömmlichen Femsehempfänger über dessen HF-Eingang oder über dessen Euro-AV-Buchse zugeführt werden.

Es ist weiterhin bereits bekannt, die Baugruppen einer Settop-Box in Form eines Moduls zu realisieren und dieses Modul in das Gehäuse eines Fernsehempfängers zu integrieren.

Über Rundfunksatelliten übertragene digitale Rundfunksignale können neben digitalen Audio- und Videodaten auch digitale Teletextdaten und andere digitale Daten enthalten, die mittels eines digitalen Empfangsgerätes empfangbar sind. Weiterhin ist es auch wünschenswert, mittels eines digitalen Empfangsgerätes Zugriff auf Internetdaten und/oder andere Datendienste zu haben. Will man mittels eines einzigen digitalen Empfangsgerätes eine Vielzahl von verschiedenartigen digitalen Daten empfangen und verarbeiten können, muß man in Kauf nehmen, dass die Herstellungs- und damit auch die Endverkaufspreise für digitale Empfangsgeräte hoch sind. Weiterhin sind derartige digitale Empfangsgeräte in ihrem Aufbau kompliziert, so dass an den Geräteentwickler hohe Anforderungen gestellt sind. Weiterhin wird in der Praxis von den meisten Käufern eines derartigen digitalen Empfangsgerätes eine Vielzahl der Funktionen des Gerätes niemals genutzt. Dennoch müssen auch diese Gerätekäufer die genannten hohen Preise für die digitalen Empfangsgeräte bezahlen.

Diese Nachteile werden bei einer Vorrichtung zum Empfang von digitalen Rundfunksignalen, wie sie in der DE 10007710.2 beschrieben ist, vermieden. Diese bekannte Vorrichtung, die dem Oberbegriff des Anspruchs 1 entspricht, weist ein Zusatzmodul auf, welches mit einem digitalen Empfangsgerät über eine Geräteschnittstelle verbunden ist. Das Zusatzmodul ist mit einer Signalverarbeitungseinheit versehen, welcher eingangsseitig ein vom digitalen Empfangsgerät zur Verfügung gestellter, aus dem Empfangssignal abgeleiteter MPEG-Transportstrom zugeführt wird. Das Ausgangssignal der Signalverarbeitungseinheit des Zusatzmoduls gelangt über die Geräteschnittstelle zurück in das digitale Empfangsgerät und wird dort weiter verarbeitet.

Der Erfindung liegt die Aufgabe zugrunde, einen Weg zur Verbesserung der in der DE 10007710.2 beschriebenen Vorrichtung aufzuzeigen.

Diese Aufgabe wird durch eine Vorrichtung mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass im Falle einer . Betriebsartumschaltung von einem Direkt-Modus, bei welchem der MPEG-Transportstrom unter Umgehung des Zusatzmoduls verarbeitet wird, in einen Bypass-Modus, bei welchem der MPEG-Transportstrom im Zusatzmodul verarbeitet wird, oder umgekehrt, keine Umschaltstörungen auftreten.

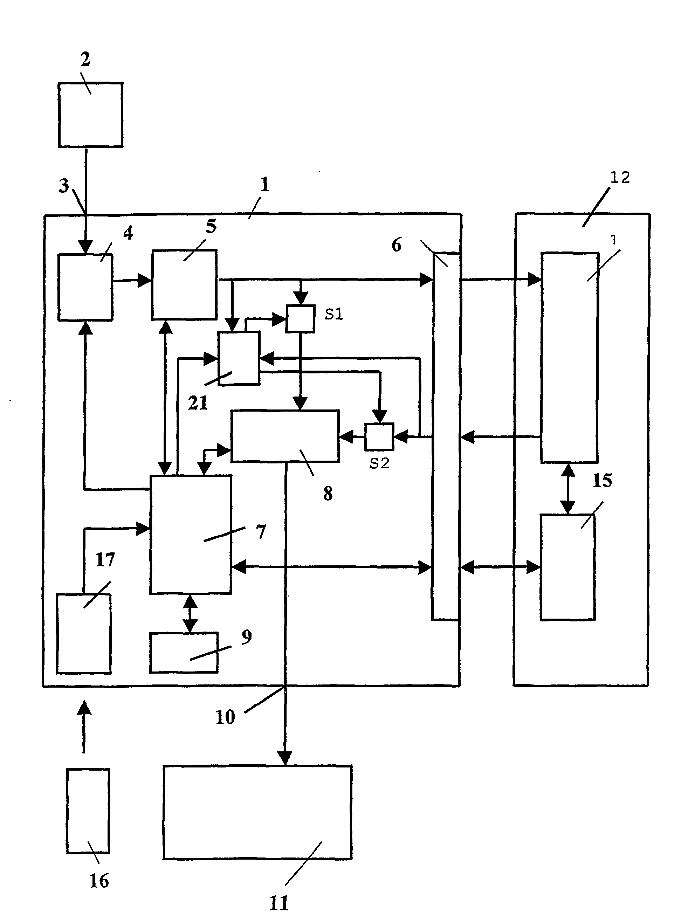

Weitere vorteilhafte Eigenschaften der Erfindung ergeben sich aus deren beispielhafter Erläuterung anhand der Figur, die ein Blockschaltbild einer Vorrichtung zum Empfang von digitalen Rundfunksignalen zeigt.

Die gezeigte Vorrichtung weist eine Satellitenempfangsantenne 2 auf, deren Ausgangssignale einem digitalen Empfangsgerät 1 über dessen Eingangsanschluß 3 zugeführt werden. Zur Wiedergabe von Signalen, die vom digitalen Empfangsgerät empfangen werden, ist ein an den Ausgang 10 des digitalen Empfangsgerätes angeschlossener Femsehempfänger 11 vorgesehen. Weiterhin steht das digitale Empfangsgerät 1 über eine Geräteschnittstelle 6 mit einem Zusatzmodul 12 in Verbindung. Die gezeigte Vorrichtung ist in verschiedenen Betriebsarten betreibbar.

In einer ersten Betriebsart werden von der Satellitenantenne 2 abgeleitete Signale dem digitalen Empfangsgerät 1, bei welchem es sich um eine Settop-Box handelt, über deren Eingangsanschluß 3 zugeleitet. Von dort aus werden sie über den Tuner 4 einem Demodulator 5 zugeführt. Dieser stellt an seinem Ausgang digitale Daten in Form eines MPEG-Transportstroms zur Verfügung. Dieser Transportstrom enthält einen Multiplex von mehreren Services, wobei die Signale in Form von Paketen übertragen werden. Ein Service kann ein oder mehrere Fernsehprogramme, ein oder mehrere Radioprogramme, Zusatzdaten zu den Radio- bzw. Femsehprogramme wie Teletextdaten, mehrsprachige Audiodaten, eine Programmzeitschrift und Untertiteldaten enthalten. Weiterhin kann ein Service auch Datendienste oder Programme im EDV-Sinne enthalten.

Dieser MPEG-Transportstrom wird über einen Schalter S1 einer Signalverarbeitungseinheit 8 zugeführt, in welcher die Selektion eines gewünschten Services bzw. eines dem Service entsprechenden Unterdatenstromes erfolgt. Weiterhin erfolgt in der Signalverarbeitungseinheit 8 eine Umwandlung des selektierten Unterdatenstromes in Signale, die über den Ausgang 10 dem angeschlossenen Femsehempfänger zugeführt werden, wo sie auf dem Bildschirm dargestellt werden.

Die Steuerung des Tuners 4, des Demodulators 5 und der Signalverarbeitungseinheit 8 erfolgt durch Steuersignale, die im Mikrocomputer 7 der Settop-Box generiert werden. Der Mikrocomputer 7 erzeugt die genannten Steuersignale in Abhängigkeit von Bedienbefehlen, die mittels der einen Fembedienungsgeber 16 und einen Fernbedien-Empfänger 17 aufweisenden Bedieneinheit der Settop-Box eingegeben werden.

In einer weiteren Betriebsart der gezeigten Vorrichtung werden von der Satellitenantenne 2 abgeleitete Signale dem digitalen Empfangsgerät 1, bei welchem es sich um eine Settop-Box handelt, über deren Eingangsanschluß 3 zugeführt. Von dort aus werden sie über den Tuner 4 dem Demodulator 5 zugeführt. Dieser stellt an seinem Ausgang digitale Daten in Form eines MPEG-Transportstroms zur Verfügung, der - wie bereits oben ausgeführt wurde - einen Multiplex von mehreren Services aufweist. Einer dieser Services enthält verschlüsselte Bildsignale.

Die Settop-Box 1 ist selbst nicht dazu in der Lage, derartige verschlüsselte Bildsignale zu entschlüsseln. Folglich wird in diesem Fall der MPEG-Transportstrom über die Geräteschnittstelle 6 dem Zusatzmodul 12 zugeführt. Dieses weist eine Signalverarbeitungseinheit 14 auf, in welcher ein Bildsignal-Entschlüssler vorgesehen ist.

Zur Separation des den verschlüsselten Bildsignalen entsprechenden Unterdatenstromes müssen dem Zusatzmodul 12 die zugehörigen Kennungen des Unterdatenstromes mitgeteilt werden, so dass das Zusatzmodul diesen Unterdatenstrom selbsttätig extrahieren und entschlüsseln kann. Die Kennungen können dabei direkt oder indirekt über Befehle der Bedieneinheit 16, 17 der Settop-Box vorgegeben werden und über den Mikrocomputer 7 und die Schnittstelle 6 dem Mikrocomputer 15 des Zusatzmoduls zugeführt werden.

Dieser generiert ein Steuersignal für die Signalverarbeitungseinheit 14, welches den zu entschlüsselnden Unterdatenstrom spezifiziert.

Die mittels der Signalverarbeitungseinheit 14 entschlüsselten Signale werden über die Geräteschnittstelle 6 und einen Schalter S2 an die Signalverarbeitungseinheit 8 der Settop-Box 1 zurückgeführt.

Die Settop-Box 1 oder der daran angeschlossene Femsehempfänger 11 weist einen Sender- bzw. Programmspeicher auf, in welchem für eine Vielzahl von Femsehprogrammen charakteristische Daten abgespeichert sind. Zu diesen Daten gehören beispielsweise Informationen über die Empfangsfrequenz, die Kennung des dem Femsehprogramm entsprechenden Unterdatenstromes, die Art einer evtl. Verschlüsselung, usw..

Erfolgt mittels der Tasten des Fernbedienungsgebers 16 eine Umschaltung auf ein gewünschtes Femsehprogramm, dann liest der Mikrocomputer 7 aus dem genannten Senderspeicher die zu dem gewünschten Femsehprogramm gehörigen charakteristischen Daten aus und verwendet sie zur Ansteuerung des Tuners 4, des Demodulators 5, eines Paketstartdetektors 21 und der Signalverarbeitungseinheit 8. Weiterhin überträgt der Mikrocomputer 7 bestimmte der charakteristischen Daten über die Schnittstelle 6 zum Mikrocomputer 15 des Zusatzmoduls 12. Zu diesen über die Schnittstelle 6 zum Mikrocomputer 15 übertragenen charakteristischen Daten gehören beispielsweise die Kennung des jeweiligen Unterdatenstromes und die Art einer evtl. Verschlüsselung.

Erfolgt nun beispielsweise eine Programmumschaltung von einem ersten Femsehprogramm, welches nicht verschlüsselt übertragen wird, auf ein zweites Femsehprogramm, welches verschlüsselt übertragen wird, dann muss von einer Betriebsart, bei welcher der MPEG-Datenstrom unter Umgehung des Zusatzmoduls 12 über den Schalter S1 direkt an die Signalverarbeitungseinheit 8 geleitet wird (Direkt-Modus), umgeschaltet werden auf eine weitere Betriebsart, bei welcher der MPEG-Datenstrom über das Zusatzmodul 12 und den Schalter S2 an die Signalverarbeitungseinheit 8 geführt wird (Bypass-Modus).

Um bei diesem Umschaltvorgang Störungen im wiedergegebenen Bild zu vermeiden oder zumindest zu reduzieren, sind beim gezeigten Ausführungsbeispiel der Paketstartdetektor 21 und die Schalter S1 und S2 vorgesehen.

Die mittels des Fembedienungsgebers getätigte Eingabe eines entsprechenden Umschaltbefehles wird vom Mikrocomputer 7 registriert. Der Mikrocomputer 7 erkennt durch die aus dem Senderspeicher 9 ausgelesenen charakteristischen Daten, dass eine Umschaltung vom Direkt-Modus in den Bypass-Modus durchzuführen ist, und führt dem Paketstartdetektor 21 ein entsprechendes Steuersignal zu. Der Paketstartdetektor 21 erkennt durch Auswertung des vom Zusatzmoduls 12 gelieferten entschlüsselten Signals das Vorliegen eines Paketstartes anhand des im Datenstrom enthaltenen Paketstartindikators und gibt den Signalweg zwischen dem Zusatzmodul 12 und der Signalverarbeitungsschaltung 8 durch ein Schließen des Schalters S2 erst beim Auftreten des genannten Paketstartindikators frei. Gleichzeitig öffnet der Paketstartdetektor 21 den bis dahin geschlossenen Schalter S1.

Durch ein derartiges paketsynchrones Umschalten auf einen neuen Datenpfad wird insbesondere vermieden, dass eine Umschaltung während der Dauer eines Paketes erfolgt, was mit Störungen im wiedergegebenen Bild und Zeitverzögerungen bis zum Erhalt eines neuen Bildes verbunden wäre. Vorzugsweise ist im Datenblock 21 zusätzlich zum Paketstartdetektor auch ein Übertragungsrahmenstartdetektor enthalten. Ein vollständiges Bild eines gewünschten Femsehprogrammes ist im MPEG-Datenstrom auf mehrere Pakete verteilt, die im Zeitmultiplex mit den Paketen anderer Femsehprogramme und weiterer Services übertragen werden. Mittels des genannten Übertragungsrahmenstartdetekors wird durch Auswertung eines im Datenstrom enthaltenen Übertragungsrahmenstartbits der Beginn eines neuen Bildes detektiert und der oben genannte Umschaltvorgang erst dann freigegeben, wenn im Sinne einer UND-Verknüpfung sowohl der Paketstartdetektor als auch der Übertragungsrahmenstartdetektor ein Ausgangssignal zur Verfügung stellen. Dies kann beispielsweise unter Verwendung einer einfachen Logikschaltung, die Flip-Flops aufweist, realisiert werden.

Erfolgt hingegen eine Programmumschaltung von einem ersten Femsehprogramm, welches verschlüsselt übertragen wird, auf ein zweites Femsehprogramm, welches nicht verschlüsselt übertragen wird, dann muss von einer Betriebsart, bei welcher der MPEG-Datenstrom über das Zusatzmodul 12 und den Schalter S2 an die Signalverarbeitungseinheit 8 geführt wird (Bypass-Modus), umgeschaltet werden auf eine weitere Betriebsart, bei welcher der MPEG-Datenstrom unter Umgehung des Zusatzmoduls 12 über den Schalter S1 direkt an die Signalverarbeitungseinheit 8 geleitet wird (Direkt-Modus).

Um bei diesem Umschaltvorgang Störungen im wiedergegebenen Bild zu vermeiden oder zumindest zu reduzieren, sind beim gezeigten Ausführungsbeispiel der Paketstartdetektor 21 und die Schalter S1 und S2 vorgesehen.

Die mittels des Fembedienungsgebers getätigte Eingabe eines entsprechenden Umschaltbefehles wird vom Mikrocomputer 7 registriert. Der Mikrocomputer 7 erkennt durch die aus dem Senderspeicher 9 ausgelesenen charakteristischen Daten, dass eine Umschaltung vom Bypass-Modus in den Direkt-Modus durchzuführen ist, und führt dem Paketstartdetektor 21 ein entsprechendes Steuersignal zu. Der Paketstartdetektor 21 erkennt durch Auswertung des vom Demodulator 5 gelieferten entschlüsselten Signals das Vorliegen eines Paketstartes anhand des im MPEG-Transportstrom enthaltenen Paketstartindikators und gibt den Signalweg zwischen dem Demodulator 5 und der Signalverarbeitungsschaltung 8 durch ein Schließen des Schalters S1 erst beim Auftreten des genannten Paketstartindikators frei. Gleichzeitig öffnet der Paketstartdetektor 21 den bis dahin geschlossenen Schalter S2.

Durch ein derartiges paketsynchrones Umschalten auf einen neuen Datenpfad wird insbesondere vermieden, dass eine Umschaltung während der Dauer eines Paketes erfolgt, was mit Störungen im wiedergegebenen Bild und Zeitverzögerungen bis zum Erhalt eines neuen Bildes verbunden wäre.

Vorzugsweise ist im Datenblock 21 zusätzlich zum Paketstartdetektor auch ein Übertragungsrahmenstartdetektor enthalten. Ein vollständiges Bild eines gewünschten Femsehprogrammes ist im MPEG-Datenstrom auf mehrere Pakete verteilt, die im Zeitmultiplex mit den Paketen anderer Femsehprogramme und weiterer Services übertragen werden. Mittels des genannten Übertragungsrahmenstartdetekors wird durch Auswertung eines im Datenstrom enthaltenen Übertragungsrahmenstartindikators der Beginn eines neuen Bildes detektiert und der oben genannte Umschaltvorgang erst dann freigegeben, wenn im Sinne einer UND-Verknüpfung sowohl der Paketstartdetektor als auch der Übertragungsrahmenstartdetektor ein Ausgangssignal zur Verfügung stellen. Dies kann beispielsweise unter Verwendung einer einfachen Logikschaltung, die Flip-Flops aufweist, realisiert werden.

Alternativ zum Empfang von Bildsignalen sind mittels der in der Figur dargestellten Vorrichtung durch Tonsignale, Datensignale und andere Services empfangbar und wiedergebbar. Der Beginn eines neuen Übertragungsrahmens ist dann beispielsweise der Start einer neuen Tonsignaleinheit oder der Start einer neuen Datensignaleinheit, was auch hier durch die Übertragung eines Übertragungsrahmenstartindikators im MPEG-Transportstrom signalisiert wird.

Bei dem beschriebenen Zusatzmodul 12 handelt es sich vorzugsweise um einen flachen, diskettenähnlichen Baustein, welcher durch einen Eingabeschlitz der Settop-Box in diese einsteckbar ist und welcher im eingesteckten Zustand mit der Geräteschnittstelle 6 kontaktiert ist. Dadurch ist es leicht möglich, Zusatzmodule in flexibler Weise mit unterschiedlichen Settop-Boxen zu verwenden.

Ein digitales Empfangsgerät gemäß der Erfindung muß keine Settop-Box sein. Es kann sich bei dem digitalen Empfangsgerät auch um einen digitalen Femsehempfänger handeln, der die gezeigte Geräteschnittstelle 6 aufweist, über welche ein Zusatzmodul mit dem Empfänger verbindbar ist.

## Patentansprüche

1. Vorrichtung zum Empfangen von digitalen Rundfunksignalen, mit
- einem digitalen Empfangsgerät (1), welches eine einen Tuner (4) und einen Demodulator (5) aufweisende Empfangseinheit und
- einen ersten Mikrocomputer (7) aufweist, wobei
- am Ausgang des Demodulators (5) einem MPEG-Transportstrom entsprechende Daten vorliegen und wobei
- der Demodulator (5) mit einer ersten Signalverarbeitungseinheit (8) und über eine Geräteschnittstelle (6) des digitalen Empfangsgerätes mit einem Zusatzmodul (12) verbunden ist, und wobei
- das Zusatzmodul (12) ine zweite Signalverarbeitungseinheit (14) aufweist, deren Ausgang über die Geräteschnittstelle mit der ersten Signalverarbeitungseinheit verbunden ist,
**dadurch gekennzeichnet,**
- **dass** sie einen mit dem Ausgang des Demodulators (5) verbundenen Paketstartdetektor (21) aufweist,
- **dass** dem Paketstartdetektor (21) vom ersten Mikrocomputer (7) ein Steuersignal zuführbar ist und
- **dass** der Paketstartdetektor (21) in Ansprache auf das Steuersignal den Signalweg zur ersten Signalverarbeitungseinheit (8) erst beim Auftreten eines Paketstartindikators freigibt.

2. Vorrichtung nach Anspruch 1,
**dadurch gekennzeichnet, dass**
der erste Mikrocomputer (7) das Steuersignal nach Eingabe eines Programmumschaltbefehles generiert.

3. Vorrichtung nach Anspruch 1 oder 2,
**dadurch gekennzeichnet, dass**
der erste Mikrocomputer (7) das Steuersignal nach einer Umschaltung des digitalen Empfangsgerätes von einer ersten Betriebsart in eine zweite Betriebsart oder umgekehrt generiert, wobei in der ersten Betriebsart der am Ausgang des Demodulators (5) vorliegende MPEG-Transportstrom der ersten Signalverarbeitungseinheit (8) unter Umgehung des Zusatzmoduls (12) direkt zugeführt wird und in der zweiten Betriebsart der am Ausgang des Demodulators (5) vorliegende MPEG-Transportstrom der ersten Signalverarbeitungseinheit (8) über das Zusatzmodul (12) zugeführt wird.

4. Vorrichtung nach einem der vorhergehenden Ansprüche,
**dadurch gekennzeichnet, dass**
sie zwischen dem Demodulator (5) und der ersten Signalverarbeitungseinheit (8) einen ersten Schalter (S1) aufweist, dessen Steuereingang mit einem Ausgang des Paketstartdetektors (21) verbunden ist.

5. Vorrichtung nach einem der vorhergehenden Ansprüche,
**dadurch gekennzeichnet, dass**
sie zwischen der zweiten Signalverarbeitungseinheit (14) und der ersten Signalverarbeitungseinheit (8) einen zweiten Schalter (S2) aufweist, dessen Steuereingang mit einem Ausgang des Paketstartdetektors (21) verbunden ist.

6. Vorrichtung nach Anspruch 5,
**dadurch gekennzeichnet, dass**
der Paketstartdetektor (21) mit dem Ausgang der zweiten Signalverarbeitungsschaltung (14) verbunden ist.

7. Vorrichtung nach einem der vorhergehenden Ansprüche,
**dadurch gekennzeichnet, dass**
der Paketstartdetektor (21) Bestandteil des digitalen Empfangsgerätes (1) ist.

8. Vorrichtung nach einem der Ansprüche 1 - 6
**dadurch gekennzeichnet, dass**
der Paketstartdetektor (21) Bestandteil des Zusatzmoduls (12) ist.

9. Vorrichtung nach einem der vorhergehenden Ansprüche,
**dadurch gekennzeichnet, dass**
sie weiterhin einen mit dem Ausgang des Demodulators (5) verbundenen Übertragungsrahmenstartdetektor (21) aufweist, welcher in Ansprache auf das Steuersignal den Signalweg zur ersten Signalverarbeitungseinheit (8) erst beim Auftreten eines Übertragungsrahmenstartindikators freigibt.

10. Vorrichtung nach Anspruch 9,
**dadurch gekennzeichnet, dass**
ein Übertragungsrahmenstart dem Start eines neuen Bildes, einer neuen Tonsignaleinheit oder einer Datensignaleinheit entspricht.

## Claims

1. Device for receiving digital broadcast signals, comprising
- a digital receiver (1) that has a receiving unit comprising a tuner (4) and a demodulator (5), and
- a first microcomputer (7), wherein
- data corresponding to an MPEG transport stream are present at the output of the demodulator (5) and
wherein
- the demodulator (5) is connected to a first signal-processing unit (8) and, via an appliance interface (6) of the digital receiver, to an ancillary module (12), and wherein
- the ancillary module (12) has a second signal-processing unit (14) whose output is connected via the appliance interface to the first signal-processing unit,
**characterized**
- **in that** it has a packet start detector (21) connected to the output of the demodulator (5),
- **in that** a control signal can be fed to the packet start detector (21) from the first microcomputer (7), and
- **in that**, in response to the control signal, the packet start detector (21) clears the signal path to the first signal-processing unit (8) only when a packet start indicator appears.

2. Device according to Claim 1, **characterized in that** the first microcomputer (7) generates the control signal after a programme switchover command is inputted.

3. Device according to Claim 1 or 2, **characterized in that** the first microcomputer (7) generates the control signal after the digital receiver is switched over from a first operating mode to a second operating mode or vice versa, wherein, in the first operating mode, the MPEG transport stream present at the output of the demodulator (5) is fed directly to the first signal-processing unit (8) circumventing the ancillary module (12) and, in the second operating mode, the MPEG transport stream present at the output of the demodulator (5) is fed to the first signal-processing unit (8) via the ancillary module (12).

4. Device according to any one of the preceding claims, **characterized in that** it has, between the demodulator (5) and the first signal-processing unit (8), a first switch (S1) whose control input is connected to an output of the packet start detector (21).

5. Device according to any one of the preceding claims, **characterized in that** it has, between the second signal-processing unit (14) and the first signal-processing unit (8), a second switch (S2) whose control input is connected to an output of the packet start detector (21).

6. Device according to Claim 5, **characterized in that** the packet start detector (21) is connected to the output of the second signal-processing circuit (14).

7. Device according to any one of the preceding claims, **characterized in that** the packet start detector (21) is a component of the digital receiver (1).

8. Device according to any one of Claims 1-6, **characterized in that** the packet start detector (21) is a component of the ancillary module (12).

9. Device according to any one of the preceding claims, **characterized in that** it furthermore has a transmission frame start detector (21) that is connected to the output of the demodulator (5) and that, in response to the control signal, clears the signal path to the first signal-processing unit (8) only if a transmission frame start indicator appears.

10. Device according to Claim 9, **characterized in that** a transmission frame start corresponds to the start of a new picture, a new sound signal unit or a data signal unit.

## Revendications

1. Dispositif de réception de signaux radio numérique, équipé
- d'un récepteur numérique (1), qui présente une unité de réception possédant un tuner (4) et un démodulateur (5) et
- un premier micro-ordinateur (7), dans lequel
- à la sortie du démodulateur (5) existent des données correspondantes à un courant de transport MPEG et dans lequel
- le démodulateur (5) est relié à une première unité de traitement de signaux (8) et à un module supplémentaire (12) par l'intermédiaire d'une interface d'appareillage (6), et dans lequel
- le module supplémentaire (12) présente une seconde unité de traitement de signaux (14), dont la sortie est reliée à la première unité de traitement de signaux par l'intermédiaire de l'interface d'appareillage,
**caractérisé en ce que**
- il présente un détecteur de démarrage de paquets (21) relié à la sortie du démodulateur (5),
- un signal de commande est délivré au détecteur de démarrage de paquets (21) du premier micro-ordinateur (7) et
- le détecteur de démarrage de paquets (21) délivre au déclenchement du signal de commande un trajet de signal à la première unité de traitement de signaux (8) lors de l'apparition d'un indicateur de démarrage de paquets.

2. Dispositif selon la revendication 1, **caractérisé en ce que** le premier micro-ordinateur (7) génère le signal de commande après introduction d'une instruction de changement de programme.

3. Dispositif selon la revendication 1 ou 2, **caractérisé en ce que** le premier micro-ordinateur (7) génère le signal de commande après un changement du récepteur numérique d'un premier mode dans un second mode ou inversement, dans lequel dans le premier mode le courant de transport MPEG existant à la sortie du démodulateur (5) est délivré à la première unité de traitement de signaux (8) lors de la dérivation du module supplémentaire (12) directement et dans le second mode le courant de transport MPEG existant à la sortie du démodulateur (5) est délivré à la première unité de traitement de signaux (8) par l'intermédiaire du module supplémentaire (12).

4. Dispositif selon l'une des revendications précédentes, **caractérisé en ce qu'**il présente entre le démodulateur (5) et la première unité de traitement de signaux (8) un premier commutateur (S1) dont l'entrée de commande est reliée à une sortie du détecteur de démarrage de paquets (21).

5. Dispositif selon l'une des revendication précédentes, **caractérisé en ce qu'**il présente entre la seconde unité de traitement de signaux (14) et la première unité de traitement de signaux (8) un second commutateur (S2) dont l'entrée de commande est reliée à la sortie du détecteur de démarrage de paquets (21).

6. Dispositif selon la revendication 5, **caractérisé en ce que** le détecteur de démarrage de paquets (21) est relié à la sortie du second circuit de traitement de signaux (14).

7. Dispositif selon l'une des revendications précédentes, **caractérisé en ce que** le détecteur de démarrage de paquets (21) est un composant du récepteur numérique (1).

8. Dispositif selon l'une des revendications 1 à 6, **caractérisé en ce que** le détecteur de démarrage de paquets (21) est un composant du module supplémentaire (12).

9. Dispositif selon l'une des revendications précédentes, **caractérisé en ce qu'**il présente en outre un détecteur de démarrage de cadre de transmission (21) relié à la sortie du démodulateur (5), qui délivre au déclenchement du signal de commande un trajet de signal à la première unité de traitement de signaux (8) lors de l'apparition d'un indicateur de démarrage de cadre de transmission.

10. Dispositif selon la revendication 9, **caractérisé en ce qu'**un démarrage de cadre de transmission correspond au début d'une nouvelle image, une nouvelle unité de signaux audio ou une unité de signaux de données.
